# EUROPÄISCHE PATENTANMELDUNG

(11) **EP 2 442 000 A1**
(43) Veröffentlichungstag der Anmeldung: **18.04.2012**
(21) Anmeldenummer: 11008137.9
(22) Anmeldetag: 07.10.2011
(51) Int. Cl.: F16L 33/22

(54) **Verbindungsvorrichtung für zwei sich abschnittsweise überlappende Leitungen**

(30) Priorität: 12.10.2010 DE 102010048226
(71) Anmelder: VERITAS AG, 63571 Gelnhausen (DE)
(72) Erfinder: Kotzian, Christian, 63584 Gründau (DE); Keller, Uwe, 63571 Gelnhausen (DE); Kari, Artur, 63571 Gelnhausen (DE)
(74) Vertreter: Grünecker, Kinkeldey, Stockmair & Schwanhäusser

(57) **Zusammenfassung**

Eine Verbindungsvorrichtung (1) für zwei sich abschnittsweise überlappende Leitungen (2,3), insbesondere für einen ein Ladeluftrohr (2) überlappenden Formschlauch (3), umfassend zwei Keileinrichtungen (4,5), die über einen Keileingriff derart zusammenwirken, dass ein Innenumfang der Verbindungsvorrichtung (1) durch Relativbewegung der beiden Keileinrichtungen (4,5) verstellbar ist. Um eine Verbindungsvorrichtung (1) der eingangs genannten Art derart zu verbessern, dass sie vielseitiger einsetzbar ist, ist erfindungsgemäß vorgesehen, dass eine Arretiereinrichtung (6) die Keileinrichtungen (4,5) in axialer Richtung übergreifend anordenbar ist, um die Keileinrichtungen (4,5) in zumindest einer Relativposition zu arretieren.

## Beschreibung

Die Erfindung betrifft eine Verbindungsvorrichtung für zwei sich abschnittsweise überlappende Leitungen, insbesondere für einen ein Ladeluftrohr überlappenden Formschlauch, umfassend zwei Keileinrichtungen, die über einen Keileingriff derart zusammenwirken, dass ein Innenumfang der Verbindungsvorrichtung durch Relativbewegung der beiden Keileinrichtungen verstellbar ist.

Eine derartige Verbindungsvorrichtung ist aus der US 4,564,222 A bekannt.

Die bekannte Lösung ist für zwei zu verbindende Leitungen mit vorgegebenen Abmessungen ausgelegt. Die beiden Keileinrichtungen sind in genau einer Relativposition miteinander verbindbar. Schwankungen in den Abmessungen der Leitungen, insbesondere im Hinblick auf den Durchmesser und die Wandstärke, können durch die bekannte Verbindungsvorrichtung nicht in ausreichendem Maße kompensiert werden.

Der Erfindung liegt die Aufgabe zugrunde, eine Verbindungsvorrichtung der eingangs genannten Art derart zu verbessern, dass sie vielseitiger einsetzbar ist.

Um die der Erfindung zugrunde liegende Aufgabe zu lösen, stellt die Erfindung eine Verbindungsvorrichtung für zwei sich abschnittsweise überlappende Leitungen, insbesondere für einen ein Ladeluftrohr überlappenden Formschlauch, bereit, umfassend zwei Keileinrichtungen, die über einen Keileingriff derart zusammenwirken, dass ein Innenumfang der Verbindungsvorrichtung durch Relativbewegung der beiden Keileinrichtungen verstellbar ist, und eine Arretiereinrichtung, welche die Keileinrichtungen in axialer Richtung übergreifend anordenbar ist, um die Keileinrichtungen in zumindest einer Relativposition zu arretieren. Durch die Keilwirkung wird die Relativbewegung der beiden Keileinrichtungen in axialer Richtung in die radiale Richtung umgesetzt. Dadurch kann der Innenumfang der Verbindungsvorrichtung bzw. der auf die sich überlappenden Leitungen ausgeübte Druck bei Veränderung der Relativposition der beiden Keileinrichtungen verändert werden. Weil die Arretiereinrichtung ein von den Keileinrichtungen unabhängiges Bauteil darstellt, können die Komponenten der erfindungsgemäßen Verbindungsvorrichtung einfach ausgetauscht werden, um die Verbindungsvorrichtung an verschiedene Leitungsabmessungen anzupassen. Ferner können verschiedenartige Distanzstücke zwischengeschaltet werden, um die Schwankungen von Durchmesser und Wandstärke der zu verbindenden Leitungen zu kompensieren, wobei die Kraft in radialer Richtung auf die zu verbindenden Leitungen nach Bedarf schrittweise erhöht werden kann. Dadurch ist die erfindungsgemäße Verbindungsvorrichtung vielseitig einsetzbar. Es wird als vorteilhaft angesehen, wenn die eine der Keileinrichtungen eine radial nach außen gerichtete Keilfläche aufweist und die andere der Keileinrichtungen eine radial nach innen gerichtete Keilfläche aufweist.

Es kann sich als vorteilhaft erweisen, wenn zumindest eine der Keileinrichtungen ringförmig, vorzugsweise als Keilring, als Spannring und/oder als Dichtring, ausgebildet ist. Eine ringförmige Keileinrichtung ist verliersicher auf den zu verbindenden Leitungen anordenbar und weist eine hohe Stabilität auf.

Es kann sich als hilfreich erweisen, wenn ein Innenumfang der Verbindungsvorrichtung durch Relativbewegung der beiden Keileinrichtungen entlang der Leitungsachse verstellbar ist. Dadurch kann die Verbindungsvorrichtung durch einfache Handhabung bedarfsgerecht an verschiedene Leitungsdurchmesser und/oder Wandstärken angepasst werden.

Es kann sich als nützlich erweisen, wenn zumindest eine der Keileinrichtungen, vorzugsweise die radial innen liegende der beiden Keileinrichtungen, flexibel und/oder verformbar ist, wobei bevorzugt zumindest eine der Keileinrichtungen, vorzugsweise die radial außen liegende der beiden Keileinrichtungen, unflexibel und/oder formstabil ist. Bedingt durch den Keileingriff mit einer unflexiblen Keileinrichtung kann der Innenumfang der flexiblen Keileinrichtung leicht verändert und an verschiedene Leitungsdurchmesser und/oder Wandstärken angepasst werden.

Es kann sich als praktisch erweisen, wenn zumindest eine der Keileinrichtungen wenigstens zwei, vorzugsweise zwölf, 16, 20 oder 24 gegeneinander bewegbare Keilelemente aufweist, wobei die Keilelemente bevorzugt flexibel und/oder lamellenförmig ausgebildet sind und/oder an einem freien Ende eine Keilfläche aufweisen. Die Keilelemente werden vorzugsweise mit der anderen Keileinrichtung in Keileingriff gebracht und in radialer Richtung ausgelenkt, so dass der Innenumfang der Keileinrichtung verstellbar ist. Durch die Vielzahl der Keilelemente kann die Druckkraft in radialer Richtung besonders gleichmäßig über den Umfang der zu verbindenden Leitungen verteilt werden.

In einer vorteilhaften Weiterbildung der Erfindung ist die Arretiereinrichtung als Spannhülse ausgebildet. Die Ring- und Rückstellkräfte der zu verbindenden Leitungen wirken in radialer Richtung nach außen auf zumindest eine der Keileinrichtungen, die dadurch über den Keileingriff in axialer Richtung auseinander gedrängt werden. Die Hülse wirkt diesen Ring- und Rückstellkräften der zu verbindenden Leitungen einerseits entgegen, andererseits übergreift und schützt sie die Verbindungsstelle, so dass die Gefahr des unbeabsichtigten Lösens der Leitungen verringert werden kann.

Es kann von Vorteil sein, wenn die Arretiereinrichtung auf wenigstens eine der Keileinrichtungen, vorzugsweise auf beide Keileinrichtungen, aufrastbar ist. In diesem Fall ist zur Montage und ggf. zur Demontage der Arretiereinrichtung kein Werkzeug oder Verbindungsmittel erforderlich. Dadurch wird die Handhabung der Verbindungsvorrichtung erleichtert.

Es kann hilfreich sein, wenn die Arretiereinrichtung zumindest zwei, vorzugsweise zwölf, 16, 20 oder 24 gegeneinander bewegbare Spannelemente aufweist, wobei die Spannelemente bevorzugt flexibel und/oder lamellenförmig ausgebildet sind und/oder an einem freien Ende eine Fase aufweisen. Dadurch ist die Arretiereinrichtung leicht montierbar.

Es kann sich als praktisch erweisen, wenn zwischen der Arretiereinrichtung und wenigstens einer der Keileinrichtungen ein Distanzstück, vorzugsweise ein Federelement, bevorzugt ein Federring, angeordnet ist. Das wenigstens eine Distanzstück ist vorzugsweise in axialer Richtung zwischen einem Flansch der Arretiereinrichtung und wenigstens einer der Keileinrichtungen angeordnet, wobei bevorzugt durch dass Distanzstück eine auf die Keileinrichtung ausgeübte Kraft erhöht wird. Dadurch können Schwankungen der Durchmesser und Wandstärken der zu verbindenden Leitungen einfach kompensiert werden. Bei Bedarf kann auf diesem Wege auch die Druckkraft in radialer Richtung auf die zu verbindenden Leitungen gezielt erhöht werden. Es wird auch als vorteilhaft angesehen, wenn zwei oder mehrere Distanzstücke an der Arretiereinrichtung und wenigstens einer der Keileinrichtungen angeordnet sind. Die Distanzstücke können von identischer oder verschiedener Bauart sein.

Ein weiterer Aspekt der Erfindung betrifft eine Leitungsverbindungsanordnung, umfassend: eine Verbindungsvorrichtung nach einer der vorangegangenen Ausführungen und zwei sich abschnittsweise überlappende Leitungen, wobei die Keileinrichtungen über einen Keileingriff derart zusammenwirken, dass sie die Leitungen in einem Überlappungsbereich in radialer Richtung gegeneinander drücken, wobei die Arretiereinrichtung die Keileinrichtungen in axialer Richtung übergreift, um die Keileinrichtungen in ihrer Relativposition zu arretieren. Dadurch lassen sich die oben genannten Vorteile erzielen.

Es kann sich als vorteilhaft erweisen, wenn wenigstens eine der Keileinrichtungen mit einer der Leitungen fest verbunden ist und/oder mit einer der Leitungen einstückig ausgebildet ist und/oder mit einer der Leitungen einstückig hergestellt ist. Dadurch verringert sich die Anzahl der Bauteile der Leitungsverbindungsanordnung, so dass sich deren Montage und Handhabung erleichtern.

Es kann sich als vorteilhaft erweisen, wenn wenigstens eine der Leitungen, vorzugsweise die radial innen liegende Leitung, einen radialen Vorsprung aufweist, den die Arretiereinrichtung in axialer Richtung übergreift, um die Keileinrichtungen gegenüber dieser Leitung zu arretieren. Dadurch kann verhindert werden, dass die Verbindungsvorrichtung gegenüber den Leitungen "wandert".

In einer bevorzugten Weiterbildung der Erfindung ist eine der Leitungen als Ladeluftrohr und die andere der Leitungen als Formschlauch ausgebildet. Derartige Leitungen sind als Hochdruckund Hochtemperaturleitungen ausgelegt und sind vorzugsweise aus Kunststoff und/oder Metall sowie mit einem textilen Druckträger gefertigt. Der Formschlauch ist vorzugsweise flexibler als das Ladeluftrohr und kann leicht auf einen Anschlussstutzen des Ladeluftrohrs aufgezogen werden. Im Betrieb wirken große Kräfte, Drücke und Temperaturen auf die Leitungen, insbesondere auf die Verbindungsstelle, ein. Es muss sichergestellt werden, dass sich die beiden Leitungen über die Lebensdauer eines Fahrzeugs, das mit der Leitungsverbindungsanordnung ausgestattet ist, nicht voneinander lösen, da sonst gravierende Schäden am Fahrzeug entstehen können. Für diese Anwendung ist die erfindungsgemäße Leitungsverbindungsanordnung besonders geeignet.

Noch ein weiterer Aspekt der Erfindung betrifft ein Verfahren zur Herstellung einer Leitungsverbindungsanordnung einer der vorangegangenen Ausführungen, umfassend die Schritte:
- Verbinden der Leitungen, so dass sich die Leitungen in radialer Richtung überlappen;
- Anordnen der Keileinrichtungen und/oder Verändern der Relativposition der Keileinrichtungen im Überlappungsbereich der Leitungen, so dass die Keileinrichtungen über einen Keileingriff derart zusammenwirken, dass sie die Leitungen im Überlappungsbereich in radialer Richtung gegeneinander drücken; und
- Anordnen der Arretiereinrichtung, so dass die Arretiereinrichtung die Keileinrichtungen in axialer Richtung übergreift, um die Keileinrichtungen in einer Relativposition zu arretieren.

Bevorzugte Weiterbildungen der Erfindung ergeben sich durch Kombination der Merkmale aus den Ansprüchen mit Merkmalen aus der Beschreibung und den Zeichnungen.

### Kurze Beschreibung der Figuren

- Fig. 1: zeigt eine Seitenansicht zweier sich abschnittsweise überlappender Leitungen mit der erfindungsgemäßen Verbindungsvorrichtung bzw. eine erfindungsgemäße Leitungsverbindungsanordnung.
- Fig. 2: zeigt einen Schnitt II-II aus Fig. 1; wobei Detail X einen vergrößerten Ausschnitt des Schnittes II-II zeigt.
- Fig. 3: zeigt die Komponenten der erfindungsgemäßen Verbindungsvorrichtung bzw. Leitungsverbindungsanordnung aus den Fig. 1 und 2 in einer perspektivischen Explosionsdarstellung.

### Detaillierte Beschreibung des bevorzugten Ausführungsbeispiels

Das bevorzugte Ausführungsbeispiel der Erfindung wird nachstehend mit Bezug auf die beiliegenden Zeichnungen im Detail beschrieben.

Die erfindungsgemäße Verbindungsvorrichtung 1 für zwei sich abschnittsweise überlappende Leitungen 2, 3 umfasst zwei Keileinrichtungen 4, 5, die über einen Keileingriff derart zusammenwirken, dass ein Innenumfang der Verbindungsvorrichtung 1 durch Relativbewegung der beiden Keileinrichtungen 4, 5 verstellbar ist. Dabei ist eine Arretiereinrichtung 6 derart anordenbar, dass sie die Keileinrichtungen 4, 5 in axialer Richtung übergreift, um die Keileinrichtungen 4, 5 in zumindest einer Relativposition zu arretieren.

Die radial innen liegende Leitung 2 ist als Ladeluftrohr mit kreisrundem Innen- und Außenquerschnitt ausgebildet. Das Ladeluftrohr 2 bildet am freien Ende einen Stutzen 20, der an der Außenseite mit konusförmigen Riffelungen 21 sowie mit einem Ringflansch 22 versehen ist, so dass die radial außen liegende Leitung 3 auf den Stutzen 20 aufschiebbar und im aufgeschobenen Zustand positionsfest fixierbar ist. Das freie Ende des Stutzens 20 ist mit einer Fase versehen, so dass der Stutzen 20 leicht in die andere Leitung 3 einfädelbar ist. Die Wandstärke des Ladeluftrohrs 2 liegt beispielsweise im Bereich von 2 und 20 %, vorzugsweise im Bereich von 5 und 15 % des Durchmessers.

Die radial außen liegende Leitung 3 ist als Formschlauch mit kreisrundem Innen- und Außenquerschnitt ausgebildet. Der Innenumfang des Formschlauchs ist derart auf den Außenumfang des Stutzens 20 des Ladeluftrohrs 2 abgestimmt, dass der Formschlauch 3 mit geringem Kraftaufwand auf den Stutzen 20 aufgeschoben werden kann. Die Wandstärke des Formschlauchs 3 liegt beispielsweise im Bereich von 1 und 20 %, vorzugsweise im Bereich von 5 und 10 % des Durchmessers.

Die radial innen liegende der beiden Keileinrichtungen 4 ist als Spannring ausgebildet. Dieser Spannring 4 besteht vorzugsweise aus Kunststoff und/oder Metall und umfasst eine radial nach außen gerichtete Keilfläche 40, deren Außenumfang sich zu einem freien Ende verjüngt. Die Keilfläche 40 ist an den freien Enden von insgesamt 20 lamellenartigen Keilelementen 41 ausgebildet, die durch achsparallele Längsschlitze 42 in Umfangsrichtung unterteilt und freigeschnitten sind. Die Längsschlitze 42 erstrecken sich ausgehend vom verjüngten Ende bis in einen nicht verjüngten, hohlzylindrischen Bereich 43 des Spannrings 4 hinein. Der Innenumfang des Spannrings 4 im Bereich der lamellenartigen Keilelemente 41 ist vorzugsweise derart auf den Außenumfang des Formschlauchs 3 abgestimmt, dass die Keilelemente 41 im unbelasteten Zustand lose auf dem Außenumfang des Formschlauchs 3 sitzen. Die lamellenartigen Keilelemente 41 bzw. Spannlamellen sind flexibel, so dass Schwankungen von Durchmesser und Wandstärken der verwendeten Formschläuche 3 ausgeglichen werden können. An einem von der Keilfläche 40 abgewandten axialen Ende bildet der Spannring 4 einen Ringflansch 44, der sich vorzugsweise im Wesentlichen in einer Ebene senkrecht zur Achse des Spannrings 4 erstreckt.

Der radial außen liegende der beiden Keileinrichtungen 5 ist als massiver und vollumfänglich geschlossener Keilring mit Dichtfunktion ausgebildet, der im Gegensatz zum Spannring 4 im Wesentlichen starr, unflexibel und formstabil ist. Dieser Keilring 5 besteht vorzugsweise aus Kunststoff und/oder Metall und umfasst eine radial nach innen gerichtete Keilfläche 50, die einen umlaufenden Konus bildet, der sich ausgehend von einem hohlzylindrischen Teil 51 zu einem freien Ende des Keilrings 5 aufweitet. Die Abmessungen und Keilwinkel der Keilflächen 40, 50 des Spannrings 4 und des Keilrings 5 sind vorzugsweise derart aufeinander abgestimmt, dass die Keilflächen 40, 50 im Zustand des Keileingriffs flächig aufeinander liegen. Der Innenumfang des Keilrings 5 im Bereich des hohlzylindrischen Teils 51 ist vorzugsweise größer als der Außenumfang des Formschlauchs 3, so dass sich ein Ringspalt zwischen dem Innenumfang des Keilrings 5 und dem Außenumfang des Formschlauchs 3 bildet. An einem von der Keilfläche 50 abgewandten Ende umfasst der Keilring 5 einen Ringflansch 52, der sich vorzugsweise im Wesentlichen in einer Ebene senkrecht zur Achse des Keilrings 5 erstreckt.

Die Arretiereinrichtung 6 ist als im Wesentlichen hohlzylindrische Spannhülse 6 mit zwei entgegen gesetzten, innenseitigen Ringflanschen 63, 64 ausgebildet, um den Spannring 4 und den Keilring 5 in axialer Richtung zu übergreifen. Die Ringflanschen 63, 64 erstrecken sich vorzugsweise jeweils im Wesentlichen in einer Ebene senkrecht zur Achse des Keilrings 5. Die Spannhülse 6 umfasst 16 Spannlamellen 61 mit endseitigen Rastnasen, die durch achsparallele Längsschlitze 62 in Umfangsrichtung unterteilt sind. Die Längsschlitze 62 erstrecken sich ausgehend von einem Ende der Spannhülse 6 in gleichmäßigen Abständen voneinander und reichen bis über die Hälfte deren Länge in die Spannhülse 6 hinein. Der Innenumfang des hohlzylindrischen Teils der Spannhülse 6 ist vorzugsweise derart auf die Außenumfänge des Spannrings 4 und des Keilrings 5 abgestimmt, dass die Spannhülse 6 die hohlzylindrischen Teile 43, 51 des Spannrings 4 und des Keilrings 5 im aufgerasteten Zustand in radialer Richtung von außen kontaktiert. Die Innenumfänge der Ringflansche 63, 64 sind kleiner als die Außenumfänge der Ringflansche 44, 52 des Spannrings 4 und des Keilrings 5, so dass der Spannring 4 und der Keilring 5 zwischen den Ringflanschen 63, 64 in einem in axialer Richtung mit Druck beaufschlagten Zustand gehalten werden können. Die Spannhülse 6 wirkt demnach den Ring- und Rückstellkräften der zu verbindenden Leitungen 2, 3 entgegen, die in radialer Richtung nach außen auf den Spannring 4 wirken und den Spannring 4 und den Keilring 5 über den Keileingriff in axialer Richtung auseinander drängen. Zum Aufschieben der Spannhülse 6 auf den Spannring 4 und den Keilring 5 weisen die Spannlamellen 61 an ihrem freien Ende eine konusförmige Fase 65 auf, die sich ausgehend vom Innenumfang des Ringflansches 64 auf einen Innenumfang aufweitet, der mindestens dem Innenumfang des hohlzylindrischen Teils der Spannhülse 6 entspricht. Die Spannlamellen 61 sind derart flexibel, dass die Spannhülse 6 in voller Länge über die Außenumfänge des Spannrings 4 und des Keilrings 5 geschoben werden kann, um den Spannring 4 und den Keilring 5 in axialer Richtung zu übergreifen.

Die erfindungsgemäße Verbindungsvorrichtung 1 bzw. Leitungsverbindungsanordnung wird wie folgt montiert:

Zunächst wird der Stutzen 20 des Ladeluftrohrs 2 in den Formschlauch 3 eingefädelt und der Formschlauch 3 vorzugsweise mit aufgeschobenem Spannring 4 und Keilring 5 sowie mit aufgeschobener Spannhülse 6 auf den Stutzen 20 aufgezogen, so dass der Innenumfang des Formschlauchs 3 über der Riffelung 21 liegt und das aufgezogene Ende des Formschlauchs 3 den Ringflansch 22 des Ladeluftrohrs 2 kontaktiert. Der Keilring 5 ist dabei derart ausgerichtet, dass die Keilfläche 50 entgegen der Montagerichtung M zur Leitungsachse L weist. Der Spannring 4 wird anschließend mit der Keilfläche 40 voran in Montagerichtung M auf dem Formschlauch 3 verschoben und mit dem Keilring 5 in Keileingriff gebracht. In einem unbelasteten Zustand des Spannrings 4 sitzen die Keillamellen 41 lose auf dem Außenumfang des Formschlauchs 3, wobei die Außenumfänge des Spannrings 4, des Keilrings 5 und des Ringflansches 22 des Ladeluftrohrs 2 im Wesentlichen bündig zueinander angeordnet sind.

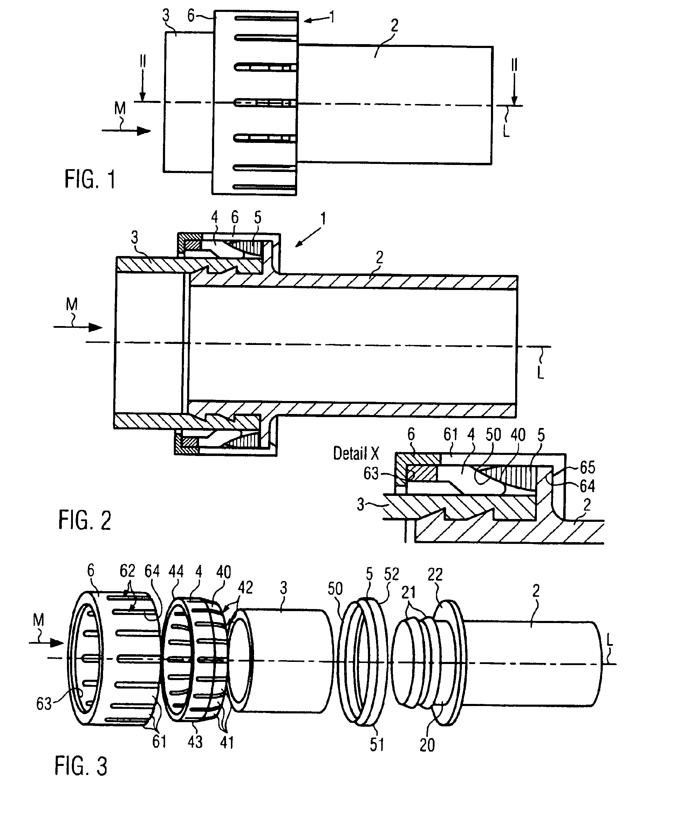

Anschließend wird die Spannhülse 6 mit der Fase 65 voran in Montagerichtung M über die Außenumfänge des Spannrings 4 und des Keilrings 5 geschoben, bis sie den Spannring 4 und den Keilring 5 in axialer Richtung in voller Länge übergreift und die Rastnasen der Spannlamellen 61 hinter dem Ringflansch 22 des Ladeluftrohrs 2 einrasten. Der eingerastete Zustand ist in Fig. 1 und Fig. 2 dargestellt. Beim Aufschieben der Spannhülse 6 wird der Spannring 4 entlang der Leitungsachse L in Richtung des Keilrings 5 bewegt, so dass sich der Abstand zwischen dem Spannring 4 und dem Keilring 5 verringert. Dabei werden die Keillamellen 41 des Spannrings 4 an der Keilfläche 50 des Keilrings 5 in radialer Richtung nach innen verdrängt, so dass sich der Innenumfang der Verbindungsvorrichtung 1 bzw. der Spannlamellen 61 des Spannrings 4 verringert. Die Relativbewegung zwischen dem Spannring 4 und dem Keilring 5 wird somit über den Keileingriff der Keilflächen 40, 50 in radialer Richtung auf den Formschlauch 3 übertragen. Dadurch wird der Formschlauch 3 gegen den Stutzen 20 des Ladeluftrohrs 2 gedrückt und im Ergebnis positionssicher und dichtend an dem Ladeluftrohr 2 festgelegt. Die Spannhülse 6 arretiert den Spannring 4 und den Keilring 5 in einer Relativposition, in welcher die Druckkraft in radialer Richtung ausreichend ist, um die Leitungen 2, 3 in einem verbundenen Zustand zu halten, ohne die Leitungen 2, 3 zu schädigen.

Der Keilwinkel beider Keilflächen 40, 50 (= Neigung der Keilflächen 40, 50 zur Achse L) liegt beispielsweise jeweils im Bereich von 5 bis 60°, vorzugsweise im Bereich von 10 bis 45°, bevorzugt im Bereich von 20 bis 30°, wobei die Keilflächen 40, 50 vorzugsweise in genau entgegen gesetzte Richtungen weisen und die Keilwinkel bevorzugt derart aufeinander abgestimmt sind, dass sich die Keilflächen 40, 50 im Zustand des Keileingriffs flächig kontaktieren.

## Patentansprüche

1. Verbindungsvorrichtung (1) für zwei sich abschnittsweise überlappende Leitungen (2, 3), insbesondere für einen ein Ladeluftrohr (2) überlappenden Formschlauch (3), umfassend zwei Keileinrichtungen (4, 5), die über einen Keileingriff derart zusammenwirken, dass ein Innenumfang der Verbindungsvorrichtung (1) durch Relativbewegung der beiden Keileinrichtungen (4, 5) verstellbar ist, **gekennzeichnet durch**: eine Arretiereinrichtung (6), welche die Keileinrichtungen (4, 5) in axialer Richtung übergreifend anordenbar ist, um die Keileinrichtungen (4, 5) in zumindest einer Relativposition zu arretieren.

2. Verbindungsvorrichtung (1) nach Anspruch 1, **dadurch gekennzeichnet, dass** zumindest eine der Keileinrichtungen (4, 5) ringförmig, vorzugsweise als Keilring, als Spannring und/oder als Dichtring, ausgebildet ist.

3. Verbindungsvorrichtung (1) nach wenigstens einem der vorangegangenen Ansprüche, **dadurch gekennzeichnet, dass** ein Innenumfang der Verbindungsvorrichtung (1) durch Relativbewegung der beiden Keiteinrichtungen (4, 5) entlang der Leitungsachse (L) verstellbar ist.

4. Verbindungsvorrichtung (1) nach wenigstens einem der vorangegangenen Ansprüche, **dadurch gekennzeichnet, dass** zumindest eine der Keileinrichtungen (4, 5), vorzugsweise die radial innen liegende der beiden Keileinrichtungen (4, 5), flexibel und/oder verformbar ist, wobei bevorzugt zumindest eine der Keileinrichtungen (4, 5), vorzugsweise die radial außen liegende der beiden Keileinrichtungen (4, 5), unflexibel und/oder formstabil ist.

5. Verbindungsvorrichtung (1) nach wenigstens einem der vorangegangenen Ansprüche, **dadurch gekennzeichnet, dass** zumindest eine der Keileinrichtungen (4) wenigstens zwei, vorzugsweise zwölf, 16, 20 oder 24 gegeneinander bewegbare Keilelemente (41) aufweist, wobei die Keilelemente (41) bevorzugt flexibel und/oder lamellenförmig ausgebildet sind und/oder an einem freien Ende eine Keilfläche (40) aufweisen.

6. Verbindungsvorrichtung (1) nach wenigstens einem der vorangegangenen Ansprüche, **dadurch gekennzeichnet, dass** die Arretiereinrichtung (6) als Spannhülse (6) ausgebildet ist.

7. Verbindungsvorrichtung (1) nach wenigstens einem der vorangegangenen Ansprüche, **dadurch gekennzeichnet, dass** die Arretiereinrichtung (6) auf wenigstens eine der Keileinrichtungen (4, 5), vorzugsweise auf beide Keileinrichtungen (4, 5), aufrastbar ist.

8. Verbindungsvorrichtung (1) nach wenigstens einem der vorangegangenen Ansprüche, **dadurch gekennzeichnet, dass** die Arretiereinrichtung (6) zumindest zwei, vorzugsweise zwölf, 16, 20 oder 24 gegeneinander bewegbare Spannelemente (61) aufweist, wobei die Spannelemente (61) bevorzugt flexibel und/oder lamellenförmig ausgebildet sind und/oder an einem freien Ende eine Fase (65) aufweisen.

9. Verbindungsvorrichtung (1) nach wenigstens einem der vorangegangenen Ansprüche, **dadurch gekennzeichnet, dass** zwischen der Arretiereinrichtung (6) und wenigstens einer der Keileinrichtungen (4, 5) ein Distanzstück, vorzugsweise ein Federelement, bevorzugt ein Federring, angeordnet ist.

10. Leitungsverbindungsanordnung, umfassend: eine Verbindungsvorrichtung (1) nach einem der vorangegangenen Ansprüche und zwei sich abschnittsweise überlappende Leitungen (2, 3), wobei die Keileinrichtungen (4, 5) über einen Keileingriff derart zusammenwirken, dass sie die Leitungen (2, 3) in einem Überlappungsbereich in radialer Richtung gegeneinander drücken, **dadurch gekennzeichnet, dass** die Arretiereinrichtung (6) die Keileinrichtungen (4, 5) in axialer Richtung übergreift, um die Keileinrichtungen (4, 5) in ihrer Relativposition zu arretieren.

11. Leitungsverbindungsanordnung nach Anspruch 10, **dadurch gekennzeichnet, dass** wenigstens eine der Keileinrichtungen (4, 5) mit einer der Leitungen (2, 3) fest verbunden ist und/oder mit einer der Leitungen (2, 3) einstückig ausgebildet ist und/oder mit einer der Leitungen (2, 3) einstückig hergestellt ist.

12. Leitungsverbindungsanordnung nach einem der Ansprüche 10 oder 11, **dadurch gekennzeichnet, dass** wenigstens eine der Leitungen (2, 3), vorzugsweise die radial innen liegende Leitung (2), einen radialen Vorsprung (22) aufweist, den die Arretiereinrichtung (6) in axialer Richtung übergreift, um die Keileinrichtungen (4, 5) gegenüber dieser Leitung (2) zu arretieren.

13. Leitungsverbindungsanordnung nach wenigstens einem der Ansprüche 10 bis 12, **dadurch gekennzeichnet, dass** eine der Leitungen (2) als Ladeluftrohr und die andere der Leitungen (3) als Formschlauch ausgebildet ist.

14. Verfahren zur Herstellung einer Leitungsverbindungsanordnung nach einem der Ansprüche 10 bis 13, umfassend die Schritte:
a. Verbinden der Leitungen (2, 3), so dass die Leitungen (2, 3) sich in radialer Richtung überlappen;
b. Anordnen der Keileinrichtungen (4, 5) und/oder Verändern der Relativposition der Keileinrichtungen (4, 5) im Überlappungsbereich der Leitungen (2, 3), so dass die Keileinrichtungen (4, 5) über einen Keileingriff derart zusammenwirken, dass sie die Leitungen (2, 3) im Überlappungsbereich in radialer Richtung gegeneinander drücken; **gekennzeichnet durch**
c. Anordnen der Arretiereinrichtung (6), so dass die Arretiereinrichtung (6) die Keileinrichtungen (4, 5) in axialer Richtung übergreift, um die Keileinrichtungen (4, 5) in einer Relativposition zu arretieren.
